# EUROPEAN PATENT APPLICATION

(11) **EP 4 407 838 A1**
(43) Date of publication of application: **31.07.2024**
(21) Application number: 23153869.5
(22) Date of filing: 30.01.2023
(51) Int. Cl.: H02K 1/20, H02K 7/102, H02K 7/18, H02K 3/12, H02K 21/22

(54) **ELECTRIC GENERATOR FOR A WIND TURBINE, STATOR FOR AN ELECTRIC GENERATOR AND WIND TURBINE**

(71) Applicant: Siemens Gamesa Renewable Energy A/S, 7330 Brande (DK)
(72) Inventor: Booth, James Kenneth, 7330 Brande (DK); Jensen, Simon Vyff, 7160 Tørring (DK); Nielsen, Jacob Blach, 8670 Laasby (DK)
(74) Representative: SGRE-Association

(57) **Abstract**

Electric generator for a wind turbine (7), comprising an inner stator (10) and a rotatably mounted outer rotor (11), wherein on at least one brake support plate (23) of the electric generator (7) at least one braking member (21) is arranged, wherein the at least one braking member (21) is adapted to interact with at least one brake disk (22) which is attached to the rotor (11) to brake and/or to lock a rotation of the rotor (11), wherein the at least one brake support plate (23) is one of several laminated stator plates (14) which constitute an iron core (13) of the stator (10).

## Description

The present invention relates to an electric generator for a wind turbine, comprising an inner stator an a rotatably mounted outer rotor, wherein on at least one brake support plate of the electric generator at least one braking member is arranged, wherein the at least one braking member is adapted to interact with at least one brake disk which is attached to the rotor bake and/or to lock a rotation of the rotor. The present invention is furthermore related to an inner stator for an electric generator. Additionally, the present invention is related to a wind turbine.

Particularly for maintenance purposes, it can be necessary to brake or to lock the rotation of a generator of a wind turbine. The rotation of respective components of the electric generator or of the wind turbine itself can cause a danger for service personnel working in the vicinity of these components. Hence, there is the need for generators of wind turbines to realize braking systems for decelerating and/or locking the rotation or movement of these components.

EP 2 896 824 A1 discloses a brake system for a wind turbine generator, wherein a ring-like component is connected to a flange of a stator assembly, wherein frictional members are attached to the component to frictionally engage with a brake disk which is connected to an outer rotor.

It is an object of the present invention to realize an enhanced concept for a braking system for an electric generator for a wind turbine, particularly with respect to the weight of the electric generator and to the manufacturing process.

To solve this problem, the electric generator as initially described is characterized in that the at least one brake support plate is one of several laminated stator plates which constitute an iron core of the stator.

The present invention is based on the idea that instead of having a separate component for attaching the braking members, the stator plate is used in a synergetic way to realize the respective function. Hence, for the electric generator according to the present invention, the ring-like component which is described in EP 2 896 824 A1 is not necessary. Thus, the electric generator according to the present invention can be manufactured more easily and its total weight is reduced.

Since the electric generator comprises an inner stator and an outer rotor, the rotor is a so-called external rotor. At least parts of the rotor extend along a section of the electric generator which is located radially outwards of the stator. The rotor is rotatable mounted with respect to a rotation axis. The stator can be cylindrically in shape and the rotor can comprise a shape of a hollow cylinder. The central axes of the respective cylinders are preferably identical and are also identical with a rotational axis of the rotor. Hence, the rotational axis extends along a longitudinal or axial direction of the stator and/or rotor. The direction pointing perpendicular away from the rotational axis is defined as a radial direction. The direction pointing perpendicular away from the radial direction into the direction a point rotates about the rotational axis is defined as a circumferential direction.

The electric generator can be a permanent-magnet generator with a plurality of permanent magnets on the rotor and an electric circuit which is realized by a plurality of stator windings which form coils and which are arranged on the stator. The rotation of the rotor causes a change of the magnetic field in the wires of the stator windings which in turn causes an electric current. Assuming that the electric generator is provided in a wind turbine, the wind-driven rotation of the rotor causes the rotation of the rotor and, hence, the electric current in the electric circuit which is used for energy or power generation. The output power of the electric generator can be in the range of multi-Megawatts, particularly between 1 and 40 Megawatts.

The stator of the electric generator according to the present invention comprises several laminated stator plates which constitute the iron core of the stator. The stator plates and, hence, the stator, can comprise a plurality of teeth which protrude outwards with respect to the radial direction, wherein two adjacent teeth laterally delimit a slot, wherein sections of the stator windings which extend along a longitudinal direction of the stator are arranged within the slots.

The brake disk can be a ring-like component. It can be attached to the rotor, particularly on its axial front face. The brake disk can be made of metal.

In a preferred embodiment, the at least one brake support plate is at least one axial end plate of the iron core. The brake support plate realizes an axial front- or end face of the stator. Preferably, the at least one braking member is attached on the respective axial end face. Alternatively, the at least one brake support plate is at least one axial central plate of the iron core. In this embodiment the brake support plate is located between two further stator plates in the axial direction. In this embodiment, the braking members are can be arranged on a circumferential surface of the brake support plate.

The electric generator according to the present invention can be a direct-drive generator. In this embodiment, the wind turbine or generator is gearless, meaning that a gear box is substituted by the electric generator being a multipolar generator which preferably constitutes a synchronous generator.

Assuming that the electric generator is a direct-drive generator, one of the at least one brake support plate can be a non-drive end of the stator plate. In this embodiment, the stator comprises a drive end and the non-drive end which constitute opposite axial end- or front faces of the stator and which extend along the radial direction. The drive end can be tapered with respect to the radial direction. The drive end faces a main shaft which connects the rotor of the electric generator with a rotor of the wind turbine. However, basically it is also possible that one of the at least one brake support plate is the drive end stator plate.

The at least one braking member can be attached to an outer radial end of the at least one brake support plate. The brake support plate can have the geometrical shape of a cylinder with a circumferential surface and two planar and circular front faces, wherein one of these front faces can be the front face of the stator. The outer radial end can be defined as the part of the brake support plate comprising the circumferential surface and a radial outer part of the front face. The radial outer part can be defined such that the radial distance between the rotation axis and this part is at least 30%, particularly at least 50%, preferably at least 80% of a total radius of the circular brake support plate.

In a preferred embodiment of the electric generator according to the present invention, at least one of the at least one braking members can extend radially outwards with respect to the rotation axis of the rotor, wherein at least one of the at least one brake disk extends radially inwards with respect to the rotation axis, wherein at least one section of the at least one braking member and at least one section of the at least one brake disk are arranged adjacently to each other with respect to the rotation axis and/or the radial direction. Moving the at least one braking member or at least a part of the at least one braking member into the axial and/or the radial direction can cause a mechanical interaction between the respective braking member and the brake disk to realize the braking and/or locking of the rotation of the rotor. In this embodiment, it is also possible that several parts of braking members are located on two opposite sides of the brake disk regarding the axial direction.

Preferably, several braking members are provided. In this embodiment, the mechanical load caused by braking and/or locking the brake disk is not transferred to the brake support plate via just one position, but the load is distributed over a plurality of braking members to the support plate. Hence, a yielding effect of the brake support plate caused by respective mechanical stresses is reduced and the mechanical stability is enhanced.

The braking members can be arranged at a top section, particularly a top quarter, of the electric generator. The top section refers to the height of the generator which extends typically perpendicular to the rotation axis. Alternatively, the braking members can be arranged evenly distributed along the circumferential direction of the stator.

The at least one braking member can comprise or can be coupled with a, particularly electromechanical or hydraulic or pneumatic, actor. In this embodiment, the braking member or at least a part of the braking member is movable by the actor to get in interaction with a brake disk to realize the braking and/or locking of the rotation of the rotor.

Particularly, at least one of the at least one braking member can be or can comprise at least one brake caliper and/or at least one brake shoe configured to frictionally interacting with at least one portion of the at least one brake disk to brake and/or to lock the rotation of the rotor. The caliper can comprise two brake shoes which are arranged on opposite sides of the brake disk with respect to the axial direction. The braking or locking is caused by moving the brake shoes into opposite directions such that the brake pads get in, particularly frictional, contact with the brake disk on to opposite axial faces, particularly regarding the axial direction. The at least one brake shoe can comprise a backing plate, particularly made of steel, wherein a friction material is bound to the surface that faces the brake disk.

At least one of the at least one braking member can be or can comprise at least one locking pin and/or at least one locking bolt and/or at least one locking shim configured to be brought into a position engaging into at least one recess and/or at least one hole of the at least one brake disk to lock the rotation of the rotor. Once, the rotation of the rotor has been stopped, particularly by the calipers, and the position of the recess or hole is aligned with the position of the locking pin or bolt or shim, the pin or bolt or shim is movable along an axial direction into the recess or hole. Once the locking pin or locking bolt or locking shim engages into the respective recess or hole, a rotation of the brake disk and, hence, of the rotor is blocked.

At least one of the at least one braking member can be attached to the at least one brake support plate by at least one foot element, wherein the at least one foot element realizes an axial gap between the at least one braking member and an axial front face of the iron core. The foot element can consist of metal. In this embodiment, the foot element extends along the axial direction and is located between the brake support plate and the braking member. In the axial gap, stator end windings of the stator can be arranged.

At least one of the at least one foot element can comprise a base section, wherein the base section is attached to the at least one brake support plate, particularly by a welding- and/or bolting- and/or screwing-connection. The cross section of the foot element or of the base section can diverge towards the brake support plate such that the side of the foot element which is attached to the brake support plate realizes a large contact area between the brake support plate and the foot element. Particularly, the base section can be attached to an attaching plate which is attached to the brake support plate. The attaching plate and the base section can be also made of one piece.

The stator can comprise at least one opening on the or an axial front face of the iron core, wherein cooling air and/or cooling liquid is guidable into the stator via the at least one opening. The wind turbine can comprise a cooling system to guide a cooling means like cooling air and/or cooling liquid into the stator, particularly for cooling the stator windings. The cooling system can be an open system or a closed system realizing a cooling circuit. Since instead of a separate component, the stator plate is used as the brake support plate, cooling channels of the cooling system do not have to pass the region of the separate component but can be directly connected with the stator.

At least one functional component can be attached to the at least one brake support plate, wherein at least one of the at least one functional component is a part of an airgap secure system or of a lightning system of the electric generator. In this embodiment the stator plate realizing the brake support plate furthermore acts synergetically as a holding means for further components of the generator, namely the functional component (s) .

The present invention is furthermore related to an inner stator for an electric generator according to the foregoing description, wherein on at least one brake support plate of the stator at least one braking member is arranged, wherein the at least one braking member is adapted to interact with at least one brake disk which is attached to a rotatably mounted outer rotor of the electric generator to brake and/or to lock a rotation of the rotor, wherein the at least one brake support plate is one of several laminated stator plates which constitute an iron core of the stator. All advantages and features of the electric generator according to the present invention can be transferred to the inner stator according to the present invention and vice versa.

Additionally, the present invention is related to a wind turbine, comprising at least one electric generator according to the description above. All advantages and features of the electric generator according to the present invention and the inner stator according to the present invention can be transferred to the wind turbine according to the present invention and vice versa.

Other objects and features of the present invention will become apparent from the following detailed description considered in conjunction with the accompanying drawings. The drawings, however, are only principle sketches designed solely for the purpose of illustration and do not limit the invention. The drawings show:
- Fig. 1: a schematic view of a wind turbine according to an embodiment of the present invention comprising an electric generator according to an embodiment of the present invention,
- Fig. 2: a schematic view of a radial cut through the electric generator of the wind turbine of fig. 1, comprising an inner stator according to an embodiment of the present invention, wherein the cutting line is indicated by II - II in fig. 1,
- Fig. 3: a schematic view of a longitudinal cut through the electric generator of the wind turbine of fig. 1,
- Fig. 4: an enlarged view of a section of the generator of fig. 3 which is indicated by IV in fig. 3,
- Fig. 5: a schematic and perspective view of the inner stator together with a brake disk of the generator of fig. 3,
- Fig. 6: a schematic view of a braking member which is attached to the inner stator of fig. 5, and
- Fig. 7: a schematic view of a foot element for the braking member according to a different embodiment with respect to the embodiment shown in fig. 6.

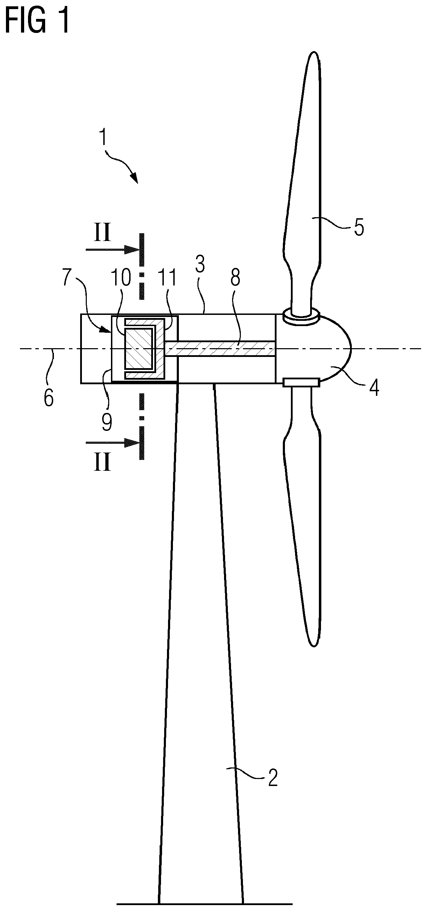

Fig. 1 shows a wind turbine 1 according to an embodiment of the present invention. The wind turbine 1 comprises a tower 2 on which a nacelle 3 is arranged. On the front of the nacelle 3, a hub 4 with several, particularly three, blades 5 is provided. The hub 4 is mounted such that it can rotate about a rotation axis 6. The wind-driven rotation of the hub 4 is transferred to an electric generator 7 according to an embodiment of the present invention which is located in the nacelle 3 by a main shaft 8 which extends along the rotation axis 6. The rotation axis 6 defines an axial direction of the generator 7. The rotation axis 6 is arranged horizontally but can be also tilted with respect to the horizontal direction. While the total height of the wind turbine 1 is in the order of tens or hundreds of meters, the output power of the wind turbine 1 is generated by the generator 7 can be in the range of multi-megawatts, particularly between 1 and 40 megawatts.

The electric generator 7 comprises an inner stator 10 according to an embodiment of the present invention and an outer rotor 11. The stator 10 and the rotor 11 are arranged within a housing 9 of the generator 7. While the stator is non-rotating, the rotor 11 is connected with the main shaft 8 such that the rotation of the hub 4 is transferred to the rotor 11. Hence, the rotor 11 can also rotate about the rotation axis 6.

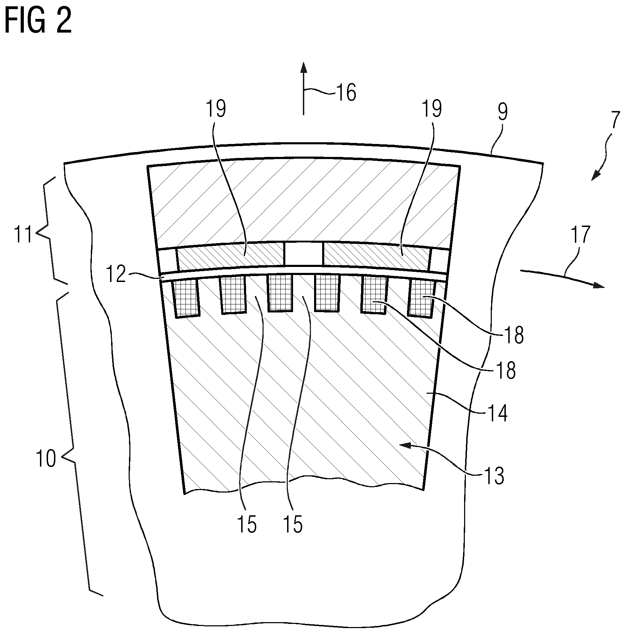

Fig. 2 shows a cross-section through a segment of the electric generator 7, wherein the sectional plane is perpendicular to the rotation axis 6. An airgap 12 with a thickness of a view millimetres is arranged between the cylindrical stator 10 and the hollow-cylindrical rotor 11. The stator 10 comprises an iron core 13 with several laminated stator plates 14. The stator plates 14 are arranged perpendicular to the rotation axis 6 such that the stack being the iron core 13 extends along the rotation axis 6. The stator plates 14 and, hence, the iron core 13 comprise a plurality of teeth 15 which protrude into a radial direction 16 which extends perpendicularly outwards from the rotation axis 16. The teeth 15 are evenly spaced along a circumferential direction 17 which is defined as the direction pointing perpendicular away from the radial direction 16 into the direction a point of the rotor 11 rotates about the rotational axis 6. Two adjacent teeth 15 laterally delimit a slot, wherein stator windings 18 for realizing coils are arranged within the slots. The windings 18 comprise end-windings 20 (not shown in fig. 2), which have a curved shape each and which connect the windings 18 of several, particularly adjacent, slots.

The rotor 11 comprises permanent magnets 19, which are arranged evenly spaced along the circumferential direction 17. The permanent magnets 19 of the rotating rotor 11 and the windings 18 of the stator 10 electromagnetically interact with each other such that a current is induced in the windings 18 and in turn a power output of the generator 7 is realized.

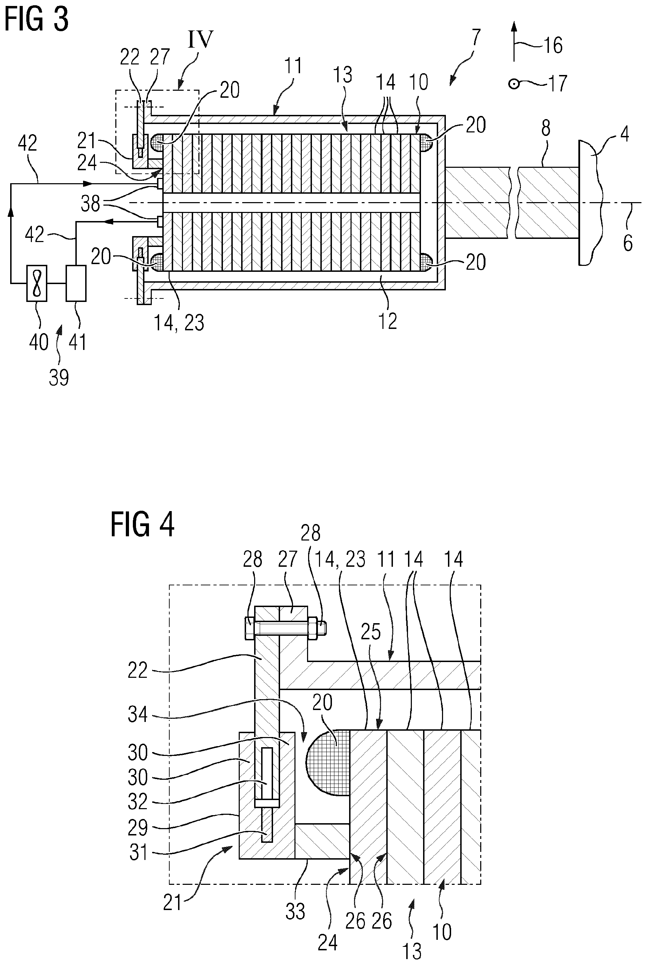

Next, it is referred to figures 3 and 4. Fig. 3 shows a longitudinal cut through the electric generator 7 along the rotation axis 6. Fig. 4 shows an enlarged part of fig. 3, which is indicated in by the box IV. The housing 9 is not shown in figures 3 and 4.

Several braking members 21 are attached to the inner stator 10. A brake disk 22 is attached to the outer rotor 11. The braking members 21 are adapted to interact with the brake disk 22 to brake and to lock the rotation of the rotor 10 and, hence, the components which are connected to the rotor 10 like the main shaft 8 and the hub 4. Typically, if maintenance work has to be performed, the rotation of the hub 4, the main shaft 8 and the rotor 11 has to be stopped to avoid danger of the respective service personnel. For stopping the rotation, in a first step, the tiling angle of each of the blades 5 is adjusted such that air dynamic effects lead to a deceleration of the rotation. Once, the respective rotation frequency falls below a certain value, in a second step, the braking members 21 are activated to decelerate the rotation down to zero and, in a third step, to finally lock the rotation of the non-rotating rotor 11.

The braking member 21 is arranged and attached on a brake support plate 23 which is constituted by one of the stator plates 14, in the present embodiment exemplarily by an axial end plate of the iron core 13 which realizes a non-drive end stator plate of the electric generator 7 being a direct-drive generator. Hence, the brake support plate 23 realizes an axial front face 24 of the iron core 13 which is opposed to the front end of the iron core 13 which faces the main shaft 8 and the hub 4.

The brake support plate 23 has a geometrical shape of a flat cylinder with a circularly bent circumferential surface 25 and two circular end plane axial front faces 26, wherein one of the front faces 26 constitute the axial front face 24 of the iron core 13. The braking members 21 are attached at an outer radial end of the brake support plate 23.

The stator 11 has the shape of a hollow cylinder with the rotation axis 6 as the center line, wherein on the front face of the rotor 11 opposed to the main shaft 8, a flange 27 is provided. The circular and ring-shaped brake disk 22 is attached to the flange 27 by screwing means 28.

As can be seen particularly in figures 3 and 4, the braking members 21 extend radially outwards and the brake disk 22 radially inwards such that one section of each of the braking members 21 and one section of the brake disk 22 are arranged adjacently to each other along the axial direction.

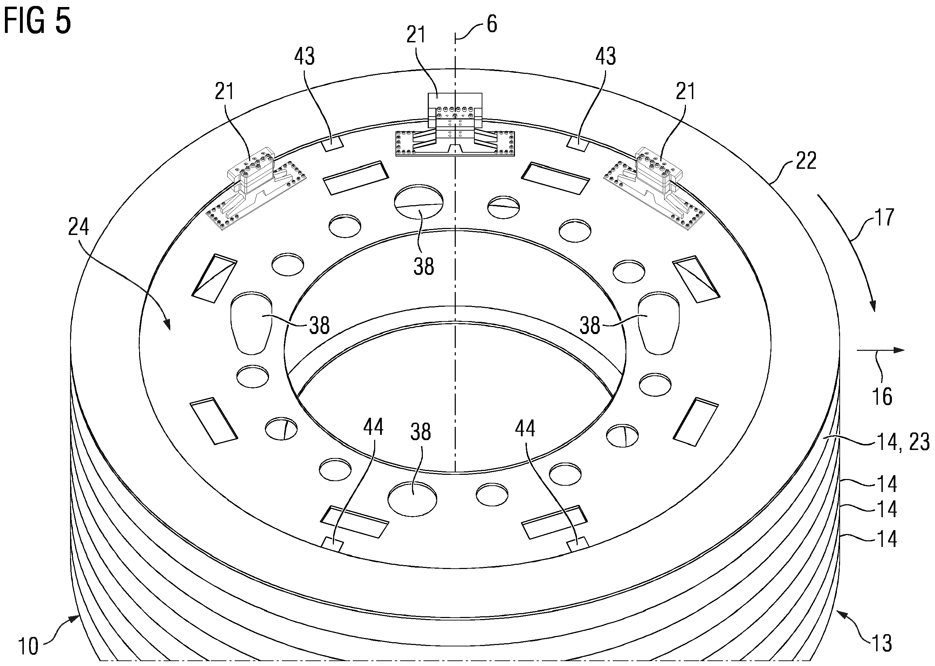

Fig. 5 shows a perspective view of the stator 10 and the brake disk 22. As can be seen, the electric generator 7 comprises several functional components 43, 44 which are attached to the brake support plate 23. First functional components 43 constitute an airgap secure system and second functional components 44 a lightning system of the electric generator 7. Exemplarily, the braking members 21 are arranged at a top section, namely a top quarter, of the electric generator 7. The top section refers to the height of the generator 7 which extends perpendicular to the rotation axis 6. Alternatively, the braking members 21 are arranged evenly distributed along the circumferential direction 17 of the stator 10.

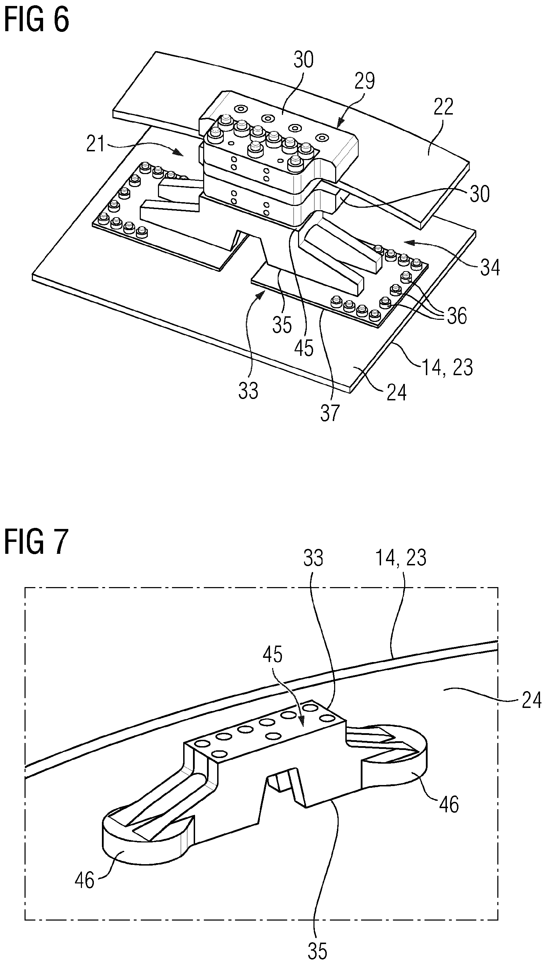

Fig. 6 shows an enlarged view of one of the braking members 21. Next, referring particularly to figures 4 to 6, details regarding the braking members 21 are described. Each of the braking members 21 comprises a brake caliper 29 with two brake pads or brake shoes 30 which are arranged along the axial direction and which have the brake disk 22 in between. The brake brake shoes 30 are configured to frictionally interact with the brake disk 22. Concretely, the brake shoes 30 are movable against each other to get in frictional contact with the brake disk 22 causing a deceleration of the respective rotation. For this, the brake shoes 30 are connected with a, particularly electromechanical or hydraulic or pneumatic, actor which is not shown in the figures.

As can be seen in fig. 4, the braking member 21 comprises a locking pin 31 which can be moved along the radial direction 16 into a position engaging into a hole 32 or recess of the brake disk 22 to lock the rotation of the rotor 11. Instead of the locking pin, at least one locking bolt and/or at least one locking shim of the braking member 21 can be provided.

Regarding the locking process of the rotor 11, once the respective rotation has been slowed down aerodynamically as have been described above, the brake caliper 29 is used to frictionally slow down the rotation of the rotor 11 to zero, wherein the brake disk 22 is brought into a position where each of the holes 32 is aligned with one of the locking pins 31. Next, the locking pins 31 are brought into the position engaging into the holes 32. For this, an actor of the locking means 21 which is not shown in the figures is provided.

The braking members 21 are attached to the brake support plate 23 by a foot element 33 each, wherein the foot element 33 realizes an axial gap 34 between the respective braking member 21 and the axial front face 24. The axial gap 34 provides a space for the stator end windings 20 such that, as can be seen particularly in fig. 4, the stator end windings 20 are arranged in the axial gap 34 between the iron core 13 and the braking member 21.

Each of the foot elements 33 comprises a base section 35 which is attached to the brake support plate 23, exemplarily by screwing means 36. For this, the base section 35 is connected with an attaching plate 37 of the foot element 33 which constitutes a large contact area between the foot element 33 and the brake support plate 23. The cross section of the base section 35 diverges towards the brake support plate 23. The base section 35 and the attaching plate 37 are exemplarily welded to each other. On the side of the base section 35 opposed to the brake support plate 23, a surface 45 of the foot element 33 is provided, wherein the braking means 21 is attached to the surface 45 by, e.g., screwing means.

Fig. 7 shows another possible embodiment of the invention with differences regarding the foot element 33. For a better view, the braking member 21 is not shown in this figure. In this embodiment, the foot element 33 is made of one piece, wherein the attaching plate 37 is not provided. The base section 35 comprises a widened part 46 to enlarge the contact area between the foot element 33 and the brake support plate 23. The foot element 33 and the brake support plate 23 are welded to each other.

Referring to figures 3 and 5 again, aspects regarding a cooling system 39 of wind turbine 1 to cool the generator 7 are explained. The stator 10 comprises several openings 38 on the axial front face 24 of the iron core 13, wherein a cooling means like cooling air or a cooling liquid is guidable into and from the stator 10 via the openings 38. Exemplarily, the cooling system 39 is a closed air cooling system 39, particularly with a fan 40 and an air cooling unit 41, particularly comprising a heat exchanger and/or other cooling components to cool the cooling air. The cooling system 39 realizes a cooling circuit with cooling channels or guiding means 42 for guiding the cooling air. The guiding means 42 can be hoses and/or ducts and/or pipes.

Although the present invention has been described in detail with reference to the preferred embodiment, the present invention is not limited by the disclosed examples from which the skilled person is able to derive other variations without departing from the scope of the invention.

## Claims

1. Electric generator for a wind turbine (7), comprising an inner stator (10) and a rotatably mounted outer rotor (11), wherein on at least one brake support plate (23) of the electric generator (7) at least one braking member (21) is arranged, wherein the at least one braking member (21) is adapted to interact with at least one brake disk (22) which is attached to the rotor (11) to brake and/or to lock a rotation of the rotor (11), **characterized in that** the at least one brake support plate (23) is one of several laminated stator plates (14) which constitute an iron core (13) of the stator (10).

2. Electric generator according to claim 1, **characterized in that** the at least one brake support plate (23) is at least one axial end plate of the iron core (13).

3. Electric generator according to claim 2, **characterized in that** the electric generator (7) is a direct-drive generator, wherein one of the at least one brake support plate (23) is a non-drive end stator plate (14).

4. Electric generator according to one of the preceding claims, **characterized in that** the at least one braking member (21) is attached to an outer radial end of the at least one brake support plate (23).

5. Electric generator according to one of the preceding claims, **characterized in that** at least one of the at least one braking member (21) extends radially outwards with respect to a rotation axis (6) of the rotor (11), wherein at least one of the at least one brake disk (22) extends radially inwards with respect to the rotation axis (6), wherein at least one section of the at least one braking member (21) and at least one section of the at least one brake disk (22) are arranged adjacently to each other with respect to the rotation axis (6) and/or a radial direction (16).

6. Electric generator according to one of the preceding claims, **characterized in that** several braking members (21) are provided, wherein the braking members (21) are arranged at a top section, particularly a top quarter, of the electric generator (7) or evenly distributed along a circumferential direction (17) of the stator (10) .

7. Electric generator according to one of the preceding claims, **characterized in that** at least one of the at least one braking member (21) is or comprises at least one brake caliper (29) and/or at least one brake shoe (30) configured to frictionally interacting with at least one portion of the at least one brake disk (22) to brake and/or to lock the rotation of the rotor (11).

8. Electric generator according to one of the preceding claims, **characterized in that** at least one of the at least one braking member (21) is or comprises at least one locking pin (31) and/or at least one locking bolt and/or at least one locking shim configured to be brought into a position engaging into at least one recess and/or at least one hole (32) of the at least one brake disk (22) to lock the rotation of the rotor (11).

9. Electric generator according to one of the preceding claims, **characterized in that** at least one of the at least one braking member (21) is attached to the at least one brake support plate (23) by at least one foot element (33), wherein the at least one foot element (33) realizes an axial gap (34) between the at least one braking member (21) and an axial front face (24) of the iron core (13).

10. Electric generator according to claim 9, **characterized in that** stator end windings (20) of the stator (10) are arranged in the axial gap (34).

11. Electric generator according to claim 9 or 10, **characterized in that** at least one of the at least one foot element (33) comprises a base section (35), wherein the base section (35) is attached to the at least one brake support plate (23), particularly by a welding- and/or bolting- and/or screwing-connection (36).

12. Electric generator according to one of the preceding claims, **characterized in that** the stator (10) comprises at least one opening (38) on the or an axial front face (24) of the iron core (13), wherein cooling air and/or cooling liquid is guidable into the stator (10) via the at least one opening (38).

13. Electric generator according to one of the preceding claims, **characterized in that** at least one functional component (43, 44) is attached to the at least one brake support plate (23), wherein at least one of the at least one functional component (43, 44) is a part of an airgap secure system or of a lightning system of the electric generator (7).

14. Inner stator for an electric generator (7) according to one of the preceding claims, wherein on at least one brake support plate (23) of the stator (10) at least one braking member (21) is arranged, wherein the at least one braking member (21) is adapted to interact with at least one brake disk (22) which is attached to a rotatably mounted outer rotor (11) of the electric generator (7) to brake and/or to lock a rotation of the rotor (11), wherein the at least one brake support plate (23) is one of several laminated stator plates (14) which constitute an iron core (13) of the stator (10).

15. Wind turbine, comprising at least one electric generator (7) according to one of the claims 1 to 13.
